# EUROPÄISCHE PATENTSCHRIFT

(11) **EP 3 021 954 B1**
(45) Veröffentlichungstag und Bekanntmachung des Hinweises auf die Patenterteilung: **03.07.2019**
(21) Anmeldenummer: 14741541.8
(22) Anmeldetag: 09.07.2014
(51) Int. Cl.: B01D 46/00

(54) **DETEKTION EINES REINIGUNGSVORGANGES EINER ANLAGE MIT ÖRTLICH VON EINANDER VERSETZT ANGEORDNETEN FILTERN**
DETECTION OF A CLEANING PROCESS OF A PLANT WITH AT LEAST ONE FILTER
DÉTECTION D'UN PROCESSUS DE NETTOYAGE D'UNE INSTALLATION COMPRENANT AU MOINS UN FILTRE

(30) Priorität: 17.07.2013 EP 13176818
(43) Veröffentlichungstag der Anmeldung: 25.05.2016
(73) Patentinhaber: Primetals Technologies Austria GmbH, 4031 Linz (AT)
(72) Erfinder: LEHOFER, Martin, Plainsboro, NJ 08536 (US); ROHRHOFER, Andreas, A-4020 Linz (AT); WEINZINGER, Michael, 4501 Neuhofen a.d. Krems (AT); HARTL, Franz, A-4020 Linz (AT); FISCHER, Paul, 4040 Linz (AT); KEUSCH, Thomas, 4020 Linz (AT); KUEHAS, Thomas, A-4225 Luftenberg (AT); RIESE, Axel, A-4020 Linz (AT)
(74) Vertreter: Metals@Linz
(86) Internationale Anmeldenummer: PCT/EP2014/064678
(87) Internationale Veröffentlichungsnummer: WO 2015/007583

(56) Entgegenhaltungen:
- EP-A1- 0 020 949
- DE-A1- 2 715 749
- DE-A1- 3 336 487
- DE-A1- 19 646 914
- DE-A1-102010 048 208

## Beschreibung

Die Erfindung betrifft ein Verfahren zur Detektion eines Reinigungsvorganges einer Anlage mit örtlich von einander versetzt angeordneten Filtern, wobei ein erstes, Feststoffpartikel aufweisendes Gas mit einer ersten Strömungsrichtung durch den jeweiligen Filter hindurchführbar ist und mittels des jeweiligen Filters filterbar ist, wobei zur Reinigung des jeweiligen Filters ein zweites Gas in zur ersten Strömungsrichtung umgekehrter Strömungsrichtung durch den jeweiligen Filter hindurchführbar ist. Weiterhin betrifft die Erfindung ein System zur Detektion eines Reinigungsvorganges einer Anlage mit örtlich von einander versetzt angeordneten Filtern zur Filterung eines ersten, Feststoffpartikel aufweisenden Gases und eine derartige Anlage.

Ein derartiges Verfahren und eine derartige Vorrichtung können zum Beispiel im Umfeld der Abgasreinigung bei metallurgischen Prozessen zum Einsatz kommen. Beispielsweise sind dies LD-, Elektrolichtbogenofen-, Sinterprozesse, etc., für welche üblicherweise Trockenschlauchfilter verwendet werden. Diese Filter dienen der Staubabscheidung.

Die Abreinigung dieser Abscheidungen basiert auf dem Prinzip des Druckstoßverfahrens (englisch: "Jet-Pulse-Abreinigung"), bei welchem zyklische, intensive Druckluftstöße aus einem Druckluftspeicher ausgelöst werden. Diese Druckluftstöße versetzen den Filterschlauch kurzzeitig in Überdruck. Die Filterschläuche werden dabei aufgebläht, die Strömungsrichtung umgekehrt und der Filterkuchen abgelöst. In der Filterphase gibt ein Stützkorb dem Schlauch die entsprechende Stabilität. Nach der Abreinigung der Filterschläuche sedimentieren die Staubpartikel in den Staubsammelraum, und das Material wird von dort zumeist über Förderschnecken und Zellenradschleusen abtransportiert.

Eine solche Schlauchfilteranlage besteht typischerweise aus einer Vielzahl von Filterschläuchen, zum Beispiel mehreren Tausend Stück, deren Abreinigung sequenziell erfolgt. Derzeit erfolgt die Abgasreinigung zyklisch gesteuert. Wenn die Abreinigung eines bestimmten Filterschlauchs nicht erfolgreich durchgeführt werden kann, kommt es erst beim nächsten Reinigungszyklus, das heißt nach der Abreinigung aller anderen Filterschläuche, zu einem erneuten Abreinigungsversuch dieses Filterschlauchs. In der Zwischenzeit ist die Funktionalität dieses Filterschlauchs stark eingeschränkt. Im Extremfall kann es zu einem Ausfall der Entstaubungsanlage kommen.

Um einen möglichst hohen Wirkungsgrad der Filteranlage zu erzielen, müssen alle Filterschläuche korrekt abgereinigt werden. Somit kommt der Detektierung von Fehlfunktionen eine hohe Bedeutung zu. Aufgrund der großen Anzahl von installierten Abreinigungsventilen ist eine solche Detektierung aber nur mit hohem technischem Aufwand realisierbar. Die auf dem Markt verfügbaren Lösungen werden aufgrund hoher Kosten oder mangelnder Funktionssicherheit nur sehr eingeschränkt angenommen.

Zu den bekannten Lösungen gehört beispielsweise eine direkte Druckmessung am vorgelagerten Druckluftspeicher, der je Segment einmal installiert ist. Hierzu wird der Druckverlauf, also der Anstieg und Abfall des Druckes, ausgewertet und eine Aussage über die Funktionalität des jeweiligen Filterschlauchs durch Vergleich mit einem charakteristischen Verlauf, insbesondere einem Gutzustand, getroffen. Diese Variante verlangt je Druckluftspeicher eine separate Druckmessung inklusive einer Auswertung und verursacht folglich hohe Kosten.

Bekannt ist weiterhin eine Stromüberwachung der Abreinigungsventile, wobei diese Methode lediglich den Stromfluss im jeweiligen Ventil überwachen kann. Die Methode liefert jedoch keine Aussage über eine korrekte Abreinigung des jeweiligen Filterschlauchs, weil beispielsweise ein mechanisches Versagen oder Fehlen der Druckluft wird nicht erkannt werden kann.

Schließlich ist auch eine Messung des Druckluftdurchflusses an der Speiseleitung der Ventile bekannt. Dieses Verfahren liefert eine Aussage über das Zusammenspiel zwischen elektrischer und pneumatischer Funktion, vorausgesetzt die Sensorik verfügt über ein schnelles Ansprechverhalten, hohe Wiederholgenauigkeit und einen großen Messbereich. Auch diese Variante verlangt je Druckluftspeicher eine separate Durchflussmessung inklusive einer Auswertung und verursacht folglich hohe Kosten.

Aus dem Wikipedia-Artikel "Schlauchfilter", abgerufen am 23.04.2013, ist das oben genannte Druckstoßverfahren zur Abreinigung bekannt.

Aus der EP0020949A1 ist eine Einrichtung zur Überwachung der Schließ- und Öffnungsfunktionen von Membranventilen, insbesondere von Membranventilen, die in Abreinigungsimpulsleitungen von Entstaubungseinrichtungen einem Druckluftspeicher nachgeschaltet sind, die jeweils mittels Elektromagnetventilen steuerbar sind, bekannt, wobei am Membranventilgehäuse bzw. am Gehäuse des Druckluftspeichers ein Schwingungen bzw. Geräusche aufnehmender Impulsgeber befestigt ist und wobei die abgegebenen Impulse mit programmierten Einzelsteuerungssignalen für die Elektromagnetventile einzeln vergleichbar sind.

Der Erfindung liegt die Aufgabe zugrunde, einen Reinigungsvorgang einer Anlage der eingangs genannten Art kostengünstig und zuverlässig detektieren zu können.

Diese Aufgabe wird durch Verfahren der eingangs genannten Art dadurch gelöst, dass mittels örtlich von einander versetzt angeordneter, akustischer Sensoren zur Erfassung von Luftschall ein jeweiliges Geräusch erfasst wird, welches während der Reinigung des jeweiligen Filters entsteht, wobei die Reinigung des jeweiligen Filters durch eine Erfassung des jeweiligen Geräusches anhand zumindest zwei der akustischen Sensoren detektiert wird.

Weiterhin wird diese Aufgabe durch ein System der oben genannten Art dadurch gelöst, dass ein erstes, Feststoffpartikel aufweisendes Gas mit einer ersten Strömungsrichtung durch den jeweiligen Filter hindurchführbar ist und mittels des jeweiligen Filters filterbar ist, wobei zur Reinigung des jeweiligen Filters ein zweites Gas in zur ersten Strömungsrichtung umgekehrter Strömungsrichtung durch den jeweiligen Filter hindurchführbar ist, wobei das System örtlich von einander versetzt angeordnete, akustische Sensoren zur Erfassung von Luftschall, mittels welchen ein Geräusch erfassbar ist, welches während der Reinigung des jeweiligen Filters entsteht, und eine Recheneinheit aufweist, mittels welcher die Reinigung des jeweiligen Filters durch eine Erfassung des jeweiligen Geräusches anhand zumindest zwei der akustischen Sensoren detektierbar ist.

Schließlich wird diese Aufgabe durch eine Anlage der eingangs genannten Art dadurch gelöst, dass die Anlage ein derartiges System und örtlich von einander versetzt angeordnete Filter aufweist, durch welche das erste Gas hindurchführbar ist und mittels welchen das erste Gas filterbar ist, wobei zur Reinigung des jeweiligen Filters ein zweites Gas in zur ersten Strömungsrichtung umgekehrter Strömungsrichtung durch den jeweiligen Filter hindurchführbar ist.

Das vorgeschlagene Verfahren beruht unter anderem auf der akustischen Erkennung eines Geräusches, des sogenannten "Abreinigungsknalls". Dieses Geräusch kann insbesondere durch einen zur Reinigung des jeweiligen Filters abgegebenen Druckluftstoß hervorgerufen werden, beispielsweise wenn ein Druckluftventil geöffnet wird, um das zweite Gas in umgekehrter Strömungsrichtung in Bezug auf die erste Strömungsrichtung durch den jeweiligen Filter hindurchzupressen. Beim Öffnen des Ventils entsteht ein für die Reinigung des jeweiligen Filters typisches, als Luftschall auftretendes Geräusch, welches vom jeweiligen Sensor erfasst wird. Entsprechend ist der jeweilige Sensor dazu ausgelegt, als Luftschall auftretende Geräusche erfassen zu können. Insbesondere wird für jeden der akustischen Sensoren ein Audiodatenstrom erzeugt, welcher beispielsweise von der Recheneinheit analysiert werden kann.

Der jeweilige Filter, welcher beispielsweise als Schlauchfilter ausgeführt sein kann, bläht sich durch den Druckluftstoß auf. Durch das Aufblähen platzen die Feststoffpartikel bzw. eine Schicht von Feststoffpartikeln, welche sich während des Filterbetriebs ansammelt, vom jeweiligen Filter ab. Auch dadurch kann gegebenenfalls ein charakteristisches Geräusch entstehen, welches vom jeweiligen Sensor erfasst werden kann.

Als Sensor können insbesondere ein oder mehrere Schallwandler, wie z.B. Mikrofone zum Einsatz kommen, welche innerhalb der Filteranlage positioniert sind und dabei kostengünstig erhältlich sind. Insbesondere sind einige der akustischen Sensoren und die Filter in einem Gehäuse der Anlage untergebracht, wobei die Sensoren derart angebracht sind, dass sie die zu erwartenden Geräusche erfassen können.

Die Anlage weist Filter auf, welche örtlich voneinander versetzt angeordnet sind, wobei auch die akustischen Sensoren örtlich von einander versetzt angeordnet sind. Dies bedeutet, dass jeweils zwei der Filter bzw. jeweils zwei der akustischen Sensoren in einem gewissen Abstand zueinander angeordnet sind. Dabei ist das vorgeschlagene System derart ausgelegt, dass das während der Reinigung eines der Filter entstehende Geräusch mittels zumindest zwei der akustischen Sensoren erfassbar ist. Der Unterschied der jeweiligen Laufzeit des Geräusches vom Ort seiner Entstehung zum jeweiligen Sensor erlaubt eine Detektion einer Reinigung des jeweiligen Filters.

Diese Anordnung gestattet eine besonders zuverlässige Detektion der Reinigung des jeweiligen Filters, wobei insbesondere so genannte "Matrixfehler" erkannt werden können. Derartige Fehler treten bei Anlagen auf, bei welchen die Filter nacheinander in einer bestimmten Reihenfolge gereinigt werden, wozu beispielsweise entsprechende Ventile nacheinander angesteuert werden. Insbesondere werden, möglichst um PLC-Ausgänge zu sparen, alle Ventile in einem Filtergebäude über eine Relais-Matrix angesteuert. D. h. einige Relais schalten den Pluspol des Ventils und wenige Weitere den Minuspol der Spule des Ventils. Geht ein Relais kaputt, so können die Kontakte im Relais verschweißen, wodurch bei einer folgenden Abreinigung mehrere Relais abreinigen oder das falsche Ventil aktiviert wird. "Matrixfehler" können prinzipiell auch aufgrund einer fehlerhaften Verkabelung möglich sein, so dass das falsche Ventil angesteuert wird und somit der falsche Filter gereinigt wird. Diese Fehlerart kann jedoch während der Inbetriebnahme noch erkannt und behoben werden. Insbesondere bei einer Fehlfunktion des falsch angesteuerten Ventils kann man somit irrtümlich zu dem Ergebnis kommen, dass ein korrekt gereinigter Filter scheinbar nicht gereinigt wurde und ein nicht oder fehlerhaft gereinigter Filter scheinbar gereinigt wurde.

Von besonderem Vorteil ist bei dem vorgeschlagenen Verfahren, dem vorgeschlagenen System und der vorgeschlagenen Anlage, dass eine korrekte Reinigung des jeweiligen Filters zuverlässig und vergleichsweise leicht erkennbar ist. Denn die Erkennung der korrekten Reinigung basiert lediglich auf der Erfassung des während der Reinigung des jeweiligen Filters entstehenden Geräusches anhand von zumindest zwei akustischen Sensoren. Insbesondere ist für die Erkennung nicht erforderlich, dass der genaue Zeitpunkt der Reinigung des jeweiligen Filters bzw. der Ansteuerung des entsprechenden Ventils vorab bekannt ist.

Die Reinigung des jeweiligen Filters wird durch einen Vergleich eines jeweiligen Zeitpunktes des Eintreffens des jeweiligen Geräusches bei zumindest zwei, vorzugsweise drei oder mehr, der akustischen Sensoren detektiert.

Da die akustischen Sensoren örtlich voneinander versetzt bzw. räumlich voneinander getrennt angeordnet sind, benötigt ein während der Reinigung eines der Filter entstehendes Geräusch üblicherweise unterschiedlich lang, um zum Ort des jeweiligen Sensors zu gelangen. Dadurch, dass zumindest zwei, vorzugsweise drei oder mehr, akustische Sensoren verwendet werden, um das jeweilige Geräusch zu erfassen, kann zuverlässig auf den Ort der Entstehung des Geräusches geschlossen werden, wodurch ein erfolgreicher Reinigungsvorgang des jeweiligen Filters detektiert werden kann. Insbesondere befindet sich am Ort der Entstehung des Geräusches ein jeweiliges Ventil, durch welches das zweite Gas in den jeweiligen Filter strömt, oder der jeweilige Filter.

Je nach Größe der Anlage bzw. je nach Anzahl der Filter in der Anlage ist dabei eine größere oder kleinere Anzahl von akustischen Sensoren erforderlich, um besonders zuverlässige Ergebnisse zu erreichen. Vorzugsweise sind die akustischen Sensoren derart angeordnet, dass die Laufwege zwischen dem Ort der Entstehung des jeweiligen Geräusches und dem jeweiligen Sensor eine eindeutige Zuordnung des jeweiligen Gehäuses zu einer erfolgreichen Reinigung eines jeweiligen Filters erlauben. Beispielsweise kann sich bei einer symmetrischen Anordnung der Filter eine asymmetrische Anordnung der Sensoren als vorteilhaft erweisen.

Bei einer weiteren vorteilhaften Ausgestaltung der Erfindung wird bzw. werden dabei durch den Vergleich des jeweiligen Zeitpunktes des Eintreffens des jeweiligen Geräusches bei zumindest zwei, vorzugsweise drei oder mehr, der akustischen Sensoren zumindest ein Differenzintervall, vorzugsweise zwei oder mehr Differenzintervalle, ermittelt, wobei das jeweilige ermittelte Differenzintervall mit einem jeweiligen, hinterlegten Differenzintervall verglichen wird.

Wird einer der Filter zur Reinigung mit dem zweiten Gas beaufschlagt, sollte dabei ein Geräusch entstehen, welches mittels der akustischen Sensoren erfassbar ist. Beispielsweise erfassen drei Sensoren das Geräusch zu einem jeweiligen Zeitpunkt tᵢ, wobei i = 1, 2, 3. Aus den drei Zeitpunkten tᵢ können somit bis zu drei Differenzintervalle δ_{i,i'} = tᵢ - t_{i'} bestimmt werden, nämlich δ_{1,2}, δ_{1,3} und δ_{2,3}. Der jeweilige Zeitpunkt tᵢ kann dabei als jeweiliger Markerzeitpunkt angesehen werden, welcher beispielsweise von dem oben erwähnten, jeweiligen Audiodatenstrom abgeleitet wird.

Die ermittelten Differenzintervalle werden mit entsprechenden, vorzugsweise vorab ermittelten und hinterlegten Differenzintervallen verglichen, woraus schließlich der Ort des Entstehens des jeweiligen Geräusches abgeleitet werden kann. Insbesondere ist somit für jedes Ventil bzw. jeden Filter gespeichert, welches Differenzintervall pro Kombination von akustischen Sensoren aufgrund der örtlichen Platzierung des Ventils bzw. des Filters in der Anlage zu erwarten ist. Der jeweilige Markerzeitpunkt dabei aufgrund der Schallgeschwindigkeit und einer entsprechenden Platzierung der Mikrofone in jedem Kanal unterschiedlich, bezeichnet aber dasselbe Schallereignis.

Insbesondere kann vorgesehen sein, dass die Recheneinheit jedes ermittelte Differenzintervall mit dem jeweiligen, vorab ermittelten Differenzintervall vergleicht, wobei ein Alarm ausgegeben wird, falls die Differenz zwischen den entsprechenden Differenzintervallen absolut oder relativ einen definierten Bereich überschreitet bzw. unterschreitet.

Für die Ermittlung der Differenzintervalle ist dabei eine Kenntnis, insbesondere eine vorherige Kenntnis, des genauen Zeitpunkts des Entstehens des jeweiligen Geräusches nicht erforderlich. Insbesondere ist das jeweilige Differenzintervall unabhängig vom genauen Zeitpunkt des Entstehens des jeweiligen Geräusches, was das vorgeschlagene Verfahren weniger fehleranfällig und sehr zuverlässig macht.

Bei einer weiteren vorteilhaften Ausgestaltung der Erfindung wird dabei zur Ermittlung des jeweiligen Zeitpunktes des Eintreffens des jeweiligen Geräusches beim jeweiligen akustischen Sensor ein Zeitpunkt einer maximalen Geräuschamplitude ermittelt.

Die Ermittlung des jeweiligen Zeitpunktes der maximalen Geräuschamplitude bzw. des jeweiligen Zeitpunktes mit der höchsten Lautstärke für den jeweiligen akustischen Sensor erlaubt eine besonders konsistente Ermittlung des jeweiligen Zeitpunktes des Eintreffens des jeweiligen Geräusches bzw. des jeweiligen Differenzintervalls. Dadurch wird die Genauigkeit und Zuverlässigkeit der Detektion weiter erhöht.

Bei einer weiteren vorteilhaften Ausgestaltung der Erfindung wird das jeweilige, erfasste Geräusch mittels einer Fourier-Transformation analysiert.

Mittels der Fourier-Transformation kann eine spektrale Analyse des jeweiligen, erfassten Geräusches erstellt werden, welche dazu verwendet werden kann, die Zuverlässigkeit der Detektion einer Reinigung des jeweiligen Filters weiter zu erhöhen. Insbesondere kann das oben erläuterte, jeweilige Differenzintervall auch unter Zuhilfenahme einer Fourier-Transformation ermittelt werden. Insbesondere sucht die Steuereinheit hierzu in den einzelnen Signalen der akustischen Sensoren bzw. im jeweiligen Audiodatenstrom nach ähnlichen Abschnitten, wobei die Zeitverschiebung zwischen den jeweiligen Abschnitten als jeweiliges Differenzintervall identifiziert wird.

Bei einer weiteren vorteilhaften Ausgestaltung der Erfindung wird dabei eine erste Meldung erzeugt, falls eine Energie des jeweiligen, erfassten Geräusches innerhalb eines vorgebbaren ersten Frequenzbandes einen vorgebbaren ersten Wert überschreitet bzw. unterschreitet.

Die jeweilige Energie wird insbesondere dadurch ermittelt, dass die Energie des jeweiligen Geräusches innerhalb des vorgebbaren ersten Frequenzbandes, d.h. zwischen einer unteren und einer oberen Frequenz, integriert bzw. aufsummiert wird. Unterschreitet bzw. überschreitet die aufsummierte Energie den vorgebbaren ersten Wert, so kann beispielsweise eine Störung des jeweiligen Filters bzw. des jeweiligen Ventils vorliegen, so dass der jeweilige Filter nicht ordnungsgemäß gereinigt wird. Der vorgebbare erste Wert kann dabei beispielsweise durch vorab durchgeführte Tests ermittelt und hinterlegt werden, wobei der vorgebbare erste Wert vorzugsweise das Geräusch charakterisiert, welches während eines erfolgreichen Reinigungsvorganges entsteht.

Die erzeugte erste Meldung umfasst insbesondere einen Hinweis auf die erläuterte Unterschreitung bzw. Überschreitung und wird beispielsweise an eine Recheneinheit oder direkt an eine für den Betrieb der Anlage verantwortliche Personen übermittelt.

Bei einer weiteren vorteilhaften Ausgestaltung der Erfindung wird eine zweite Meldung erzeugt, falls ein Verhältnis einer Energie des jeweiligen, erfassten Geräusches innerhalb eines vorgebbaren zweiten Frequenzbandes zu einer Energie des jeweiligen, erfassten Geräusches außerhalb des vorgebbaren zweiten Frequenzbandes einen vorgebbaren zweiten Wert überschreitet bzw. unterschreitet.

Die jeweilige Energie innerhalb bzw. außerhalb des vorgebbaren zweiten Frequenzbandes kann insbesondere dadurch ermittelt, dass die Energie des jeweiligen Geräusches innerhalb bzw. außerhalb des vorgebbaren zweiten Frequenzbandes integriert bzw. aufsummiert wird. Dabei wird die Energie innerhalb des vorgebbaren zweiten Frequenzbandes ins Verhältnis zur Energie außerhalb des vorgebbaren zweiten Frequenzbandes gesetzt, wobei die zweite Meldung erzeugt wird, falls das gebildete Verhältnis einen vorgebbaren zweiten Wert überschreitet bzw. unterschreitet.

Unterschreitet bzw. überschreitet das gebildete Verhältnis den vorgebbaren ersten Wert, so kann beispielsweise eine Störung des jeweiligen Filters bzw. des jeweiligen Ventils vorliegen, so dass der jeweilige Filter nicht ordnungsgemäß gereinigt wird. Der vorgebbare zweite Wert kann dabei beispielsweise durch vorab durchgeführte Tests ermittelt und hinterlegt werden, wobei der vorgebbare zweite Wert vorzugsweise das Geräusch charakterisiert, welches während eines erfolgreichen Reinigungsvorganges entsteht.

Die erzeugte zweite Meldung umfasst insbesondere einen Hinweis auf die erläuterte Unterschreitung bzw. Überschreitung und wird beispielsweise an eine Recheneinheit oder direkt an eine für den Betrieb der Anlage verantwortliche Personen übermittelt.

Bei einer weiteren vorteilhaften Ausgestaltung der Erfindung wird das jeweilige, erfasste Geräusch mittels eines Hochpass-Filters gefiltert.

Bei dem Hochpass-Filter handelt es sich insbesondere um eine elektronische Filterschaltung, mittels welcher tiefere Frequenzen gedämpft werden können, wodurch die Zuverlässigkeit der Detektion des Reinigungsvorgang erhöht werden kann.

Weiterhin kann das jeweilige, erfasste Geräusch über einen oder mehrere Verstärker zu einem Analog/Digital (A/D)-Wandler geleitet werden, wobei der Hochpass-Filter insbesondere dem A/D-Wandler vorgeschaltet ist. Der A/D-Wandler kann schließlich das digitalisierte Geräusch der Recheneinheit bereitstellen.

Das digitalisierte Geräusch kann durch die Recheneinheit von einem Auswertungsalgorithmus ausgewertet werden. Dieser Auswertungsalgorithmus kann z.B. auf folgenden Prinzipien beruhen:
- Vergleich des Schallpegels mit einem Referenzwert,
- Vergleich des zeitlichen Schallpegelverlaufs mit einer Referenzkurve,
- Auswertung charakteristischer Frequenzen, z.B. durch eine schnelle Fourier-Transformation (FFT) und/oder
- Auswertung des Pegel- und Frequenzverlaufs mittels Machine Learning.

In der Recheneinheit können auch mehrere Auswertungsalgorithmen einen Satz von erfassten Geräuschen bewerten. Das Gesamtergebnis kann z.B. durch einen gewichteten Abstimmungsalgorithmus erfolgen. Den einzelnen Bewertungsalgorithmen sind dabei je nach Aussagekraft verschiedene Gewichtungen zugeteilt.

Als Vorteile des erfindungsgemäßen Verfahrens ergeben sich somit insbesondere eine zuverlässige Detektion des jeweiligen Reinigungsvorgang, wodurch eine Steigerung der Reinigungsleistung des jeweiligen Filters durch eine korrekte Abreinigung sowie ein Kostenvorteil durch sehr kostengünstige Messausrüstung, wie zum Beispiel des jeweiligen akustischen Sensors in Form eines Mikrofons, erreichbar sind.

Zur Übertragung eines jeweiligen Sensorsignals kann der jeweilige Sensor mittels einer elektrischen Verbindung mit der Recheneinheit verbunden sein. Denkbar ist auch eine drahtlose, insbesondere optische Übertragung des Sensorsignals.

Bei einer weiteren vorteilhaften Ausgestaltung der Erfindung ist eine Schalleinhausung vorgesehen, in welcher einige der akustischen Sensoren angeordnet ist und in welcher ein jeweiliges Ventil anordenbar ist, mittels welchem das zweite Gas in zur ersten Strömungsrichtung umgekehrter Strömungsrichtung durch den jeweiligen Filter hindurchführbar ist.

Die Schalleinhausung kann beispielsweise als eine Art Kasten ausgeführt sein, welcher Störgeräusche von außerhalb unterdrückt bzw. verringert. Durch die Schalleinhausung kann die Zuverlässigkeit der Detektion der Reinigung weiter erhöht werden, weil störende Geräusche außerhalb der Schalleinhausung effektiv vom jeweiligen akustischen Sensor abgehalten werden können. Gleichzeitig wird sichergestellt, dass der jeweilige akustische Sensor die durch das jeweilige Ventil verursachten Geräusche besonders gut detektieren kann. Insbesondere lässt sich dadurch das Öffnen des jeweiligen Ventils zur Reinigung des jeweiligen Filters zuverlässig mittels des jeweiligen akustischen Sensor erfassen.

Insbesondere können weiterere akustische Sensoren außerhalb der Schalleinhausung vorgesehen sein, welche somit vom jeweiligen Ventil schalltechnisch abgeschirmt sind und die Geräusche des jeweiligen Filters während des Reinigungsprozesses erfassen können. Diese weiteren akustischen Sensoren können beispielsweise innerhalb eines Gehäuses der Anlage angeordnet sein, in welchem der jeweilige Filter untergebracht ist. Dabei kann die Schalleinhausung innerhalb oder außerhalb des Gehäuses angeordnet sein.

Die vorliegende Erfindung umfasst noch weitere Aspekte, wie zum Beispiel, dass die Recheneinheit anhand des Vergleichs des Sensorsignals mit dem Referenz-Sensorsignal einen Zustand des jeweiligen Filters und/oder des jeweiligen Ventils ermittelt.

Beispielsweise kann ein solcher Zustand des jeweiligen Filters der Gestalt sein, dass der jeweilige Filter geplatzt ist bzw. eine gravierende Beschädigung aufweist. Dies lässt sich dadurch feststellen, dass der Druckluftstoß nicht zu einem Aufblähen des jeweiligen Filters führt, was eine gewisse Zeit in Anspruch nimmt, sondern vergleichsweise schnell vonstatten geht. Denkbar ist auch, dass als Zustand festgestellt wird, dass der jeweilige Filter durch den Druckluftstoß nicht mehr reinigbar ist, beispielsweise weil die Feststoffpartikel sich dauerhaft im jeweiligen Filter festgesetzt haben. Weiterhin kann als Zustand ermittelt werden, zu welchem Grad der Filter mit Feststoffpartikeln zugesetzt ist, womit darauf geschlossen werden kann, wann die nächste Reinigung dieses Filters erforderlich ist.

Zusätzlich oder alternativ kann der Zustand des jeweiligen Ventils erfasst werden, welches für den Reinigungsvorgang des jeweiligen Filters geöffnet werden muss. Ein derartiger Zustand kann zum Beispiel sein, dass das jeweilige Ventil nicht mehr vollständig öffnet oder defekt ist, was als Referenz-Sensorsignal hinterlegt werden kann und damit wiedererkannt werden kann.

Insbesondere kann der Zustand des jeweiligen Filters bzw. des jeweiligen Ventils durch die Recheneinheit ermittelt werden, welche den Zustand des jeweiligen Filters bzw. des jeweiligen Ventils beispielsweise auf einer vorab definierten Skala einstuft. Wie weiter oben erläutert, kann die Skala dabei zwei oder mehr Zustände umfassen.

Um derartige Zustände des jeweiligen Filters bzw. des jeweiligen Ventils ermitteln zu können, können vorab beispielsweise derart präparierte Filter bzw. Ventile mit einem gewöhnlichen Druckluftstoß beaufschlagt werden, wobei wiederum mittels des jeweiligen akustischen Sensors das dabei entstehende Geräusch erfasst wird und als für den jeweiligen Zustand charakteristisches Geräusch als Referenz-Sensorsignal hinterlegt wird.

Auf diese Referenz-Sensorsignale, welche verschiedene Zustände des jeweiligen Filters bzw. des jeweiligen Ventils charakterisieren, kann später zugegriffen werden, um den Zustand einer zu überwachenden Anlage zu bestimmen.

Gemäß einem weiteren Aspekt der Erfindung wird das Sensorsignal und/oder gegebenenfalls der Zustand des jeweiligen Filters in einer Speichereinheit gespeichert, wobei ein Trend des Sensorsignals und/oder gegebenenfalls des Zustands des jeweiligen Filters unter Verwendung eines zeitlichen Verlaufs des Sensorsignals und/oder gegebenenfalls des Zustands des jeweiligen Filters bzw. des jeweiligen Ventils ermittelt wird.

Die Speicherung des Sensorsignals und/oder gegebenenfalls des Zustands des jeweiligen Filters bzw. des jeweiligen Ventils erlaubt, den jeweiligen zeitlichen Verlauf in der Speichereinheit abzuspeichern auch noch später auf diese Daten zugreifen zu können. Dies ist insbesondere für die Ermittlung des Trends erforderlich, welcher auf Grundlage des abgespeicherten zeitlichen Verlaufs ermittelt wird. Hierzu können gängige Methoden eingesetzt werden.

Durch die Ermittlung des Trends kann beispielsweise abgeschätzt werden, wann der jeweilige Filter bzw. das jeweilige Ventil manuell gewartet bzw. ausgetauscht werden muss. Dadurch kann insbesondere die Verfügbarkeit der Anlage erhöht werden, da ein solcher manueller Eingriff beispielsweise im Rahmen von turnusmäßig durchgeführten Wartungsarbeiten miteinbezogen werden kann. Dadurch können zusätzliche Wartungsarbeiten bzw. Stillstände der Anlage eingespart werden.

Insbesondere kann die Recheneinheit somit auch die Historie des Sensorsignals bzw. des Zustands des jeweiligen Filters bzw. des jeweiligen Ventils speichern, um einen zeitlichen Verlauf bilden zu können. Dies kann dazu genutzt werden, den Verschleiß eines Bauteils zu erkennen und so noch vor einem Totalausfall eine Meldung zu veranlassen. Der ermittelte Zustand kann dann gemeinsam mit der eindeutigen Kennzeichnung des jeweiligen Filters bzw. des jeweiligen Ventils sowie optional dem Zeitpunkt der Messung an ein oder mehrere Alarmsysteme übermittelt werden. Das Alarmsystem kann als Automatisierungssystem, wie zum Beispiel als Prozessvisualisierungssystem, Prozessleitsystem oder ein Condition-Monitoring-System ausgeführt sein. Optional werden auch weitere Daten, z.B. das aufgenommene Sensorsignal des jeweiligen akustischen Sensors oder eine graphische Auswertung, an das Alarmsystem übermittelt. Das Alarmsystem kann dann den Bediener bzw. Instandhalter der Anlage über die Meldung auf einem Bildschirm bzw. über eine Mensch-Maschine-Schnittstelle (human machine interface, HMI) bzw. per E-Mail, SMS oder Benachrichtigung auf einem mobilen Bediengerät, wie einem Smartphone oder Tablet Computer, informieren.

Gemäß einem weiteren Aspekt der Erfindung wird eine Meldung erzeugt, falls das Sensorsignal gleich einem vorab definierten Sensorsignal ist und/oder gegebenenfalls falls der Zustand gleich einem vorab definierten Zustand ist.

Das vorab definierte Sensorsignal und/oder gegebenenfalls der vorab definierte Zustand kann beispielsweise charakteristisch dafür sein, dass der jeweilige Filter geplatzt ist oder der jeweilige Filter bzw. das jeweilige Ventil eine gravierende Beschädigung aufweist. Dies lässt sich dadurch feststellen, dass der Druckluftstoß nicht zu einem Aufblähen des jeweiligen Filters führt, was eine gewisse Zeit in Anspruch nimmt, sondern vergleichsweise schnell vonstatten geht oder überhaupt ausbleibt. Insbesondere kann die vorab definierte Größe auch dafür charakteristisch sein, dass der jeweilige Filter durch den Druckluftstoß nicht mehr reinigbar ist, beispielsweise weil die Feststoffpartikel sich dauerhaft im jeweiligen Filter festgesetzt haben. Auch ein nicht mehr funktionierendes Ventil kann somit erkannt werden.

Beispielsweise kann das vom jeweiligen akustischen Sensor erzeugte Sensorsignal eine Lautstärke des Geräusches charakterisieren, so dass die Meldung insbesondere dann erzeugt wird, wenn das Sensorsignal bzw. die Lautstärke dem vorab definierten Sensorsignal bzw. der vorab definierten Lautstärke entspricht. Insbesondere kann das vorab definierte Sensorsignal bzw. der vorab definierte Zustand auch als Referenzband bzw. "Alarmschwelle" ausgeführt sein, welche erreicht werden muss, um die Meldung zu erzeugen. Ebenso kann das vorab definierte Sensorsignal bzw. der vorab definierte Zustand umgekehrt definiert werden: das vorab definierte Sensorsignal bzw. der vorab definierte Zustand liegt dann vor, wenn der Abreinigungsknall ausbleibt oder sich anders anhört. Folglich würde für diesen Fall die Meldung erzeugt, wenn der Abreinigungsknall ausbleibt oder sich anders anhört.

Insbesondere kann das in der Recheneinheit hinterlegte Referenz-Sensorsignal als das vorab definierte Sensorsignal ausgeführt sein.

Gemäß einem weiteren Aspekt der Erfindung wird dabei die erzeugte Meldung an ein IT-System und/oder Bedienpersonal der Anlage übermittelt. Dabei kann das IT-System insbesondere als Condition-Monitoring-System bzw. das oben erläuterte Alarmsystem ausgeführt sein, welchem gegebenenfalls auch der ermittelte Zustand gemeinsam mit der eindeutigen Kennzeichnung des jeweiligen Filters bzw. des jeweiligen Ventils sowie optional dem Zeitpunkt der Messung an ein oder mehrere Alarmsysteme übermittelt werden. Alternativ oder zusätzlich kann die Meldung auch an Wartungspersonal bzw. an für das System zuständiges Personal übermittelt werden. Durch die Übermittlung der Meldung können weitere Aktionen ausgelöst werden, wie zum Beispiel die Wartung oder das Austauschen des jeweiligen Filters.

Alternativ oder zusätzlich kann die Meldung auch dann erzeugt werden, wenn der zuvor erläuterte Trend des Sensorsignals und/oder gegebenenfalls des Zustands des jeweiligen Filters bzw. des jeweiligen Ventils innerhalb einer vorgebbaren Zeitspanne das vorab definierte Sensorsignal und/oder gegebenenfalls den vorab definierten Zustand erreicht. Dies kann beispielsweise mittels einer Interpolation auf Grundlage des ermittelten Trends vorab berechnet werden.

Generell kann das zweite Gas dabei mit dem ersten Gas identisch sein, so dass zur Reinigung des jeweiligen Filters das erste Gas in bezüglich der Strömungsrichtung des Filterprozesses umgekehrter Strömungsrichtung durch den jeweiligen Filter gepresst wird. Dabei kann der Filter beispielsweise als Schlauchfilter ausgeführt sein.

Im Folgenden wird die Erfindung anhand der in den Figuren dargestellten Ausführungsbeispiele näher beschrieben und erläutert. Es zeigen:
- FIG 1: einen Ausschnitt eines Ausführungsbeispiels des erfindungsgemäßen Systems während eines Filterprozesses,
- FIG 2: den Ausschnitt des Ausführungsbeispiels des erfindungsgemäßen Systems während eines Reinigungsprozesses,
- FIG 3: ein erstes Ausführungsbeispiel der erfindungsgemäßen Anlage
- FIG 4: ein zweites Ausführungsbeispiel der erfindungsgemäßen Anlage,
- FIG 5: einen beispielhaften zeitlichen Signalverlauf von zwei akustischen Sensoren, und
- FIG 6: eine Schemazeichnung eines dritten Ausführungsbeispiels der erfindungsgemäßen Anlage.

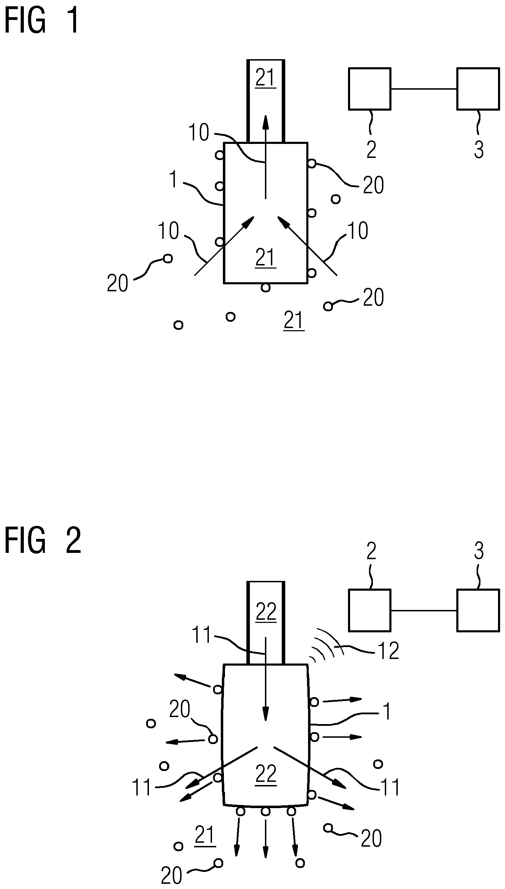

Figur 1 zeigt einen Ausschnitt eines Ausführungsbeispiels des erfindungsgemäßen Systems während eines Filterprozesses. Für den Filterprozess wird ein erstes Gas 21, welches Feststoffpartikel 20 mit sich führt, mit einer ersten Strömungsrichtung 10 durch einen Filter 1 hindurch bewegt. Dabei werden die Feststoffpartikel 20 vom Filter 1 festgehalten, so dass das erste Gas 21 beim Verlassen des Filters 1 von den Feststoffpartikeln 20 gereinigt ist.

Das System weist einen akustischen Sensor 2 zur Erfassung von Luftschall und eine Recheneinheit 3 auf, an welche der akustische Sensor 2 erfasste Sensorsignale übermitteln kann. Zur Übermittlung sind der akustische Sensor 2 und die Recheneinheit 3 beispielsweise über eine elektrische, drahtlose bzw. optische Verbindung miteinander verbunden.

Figur 2 zeigt den Ausschnitt des Ausführungsbeispiels des erfindungsgemäßen Systems während eines Reinigungsprozesses. Zum Reinigen des Filters 1 wird ein zweites Gas 22 in einer zweiten, zur ersten Strömungsrichtung umgekehrten Strömungsrichtung 11 in und durch den Filter 1 gepresst, wodurch die am Filter 1 haftenden Feststoffpartikel 20 vom Filter 1 abgelöst werden. Dies wird beispielsweise dadurch erreicht, dass sich der Filter 1 aufbläht und eine Schicht von Feststoffpartikeln 20 abfällt, welche sich auf der Oberfläche des Filters 1 gebildet hat.

Während dieses Reinigungsprozesses entsteht ein charakteristisches Geräusch 12, welches vom akustischen Sensor 2 erfasst wird.

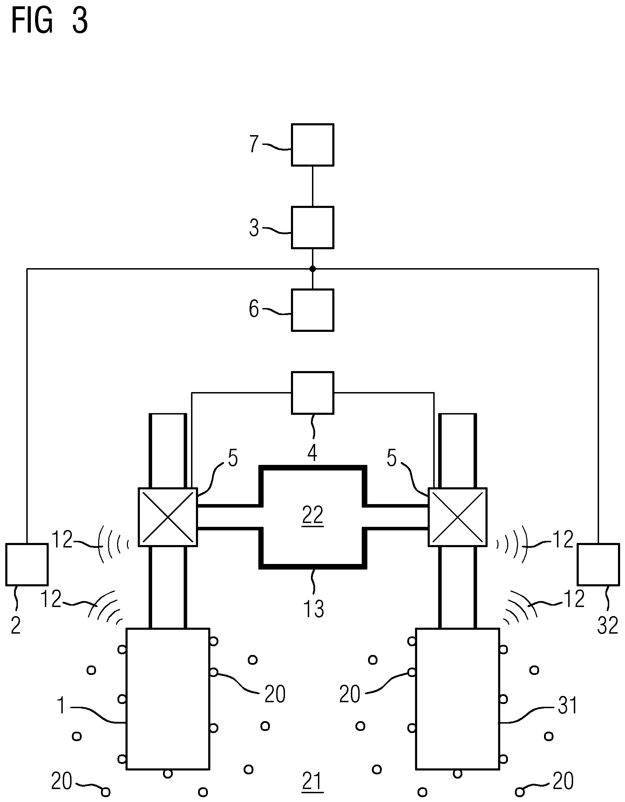

Figur 3 zeigt ein erstes Ausführungsbeispiel der erfindungsgemäßen Anlage. Die Anlage weist Filter 1, 31, ein jeweiliges Ventil 5 und ein Gefäß 13 auf. Dabei wird der Filter 1 bzw. 31 dazu verwendet, in einem Gas 21 befindliche Feststoffpartikel 20 zu filtern, wie schon in Figur 1 dargestellt und beschrieben. In dem Gefäß 13 befindet sich ein zweites Gas 22 unter einem höheren Druck. Empfängt das jeweilige Ventil 5, welches zur Signalübertragung mit einer Steuereinheit 4 verbunden ist, ein entsprechendes Signal der Steuereinheit 4, so wird das zweite Gas 22 aus dem Gefäß 13 durch das jeweilige Ventil 5 in und durch den Filter 1 bzw. 31 gepresst. Dadurch fallen am Filter 1 bzw. 31 haftende Feststoffpartikel 20 vom Filter 1 bzw. 31 ab, wodurch der Filter 1 bzw. 31 gereinigt wird.

Während des Reinigungsprozesses entsteht ein charakteristisches Geräusch 12, sei es am jeweiligen Ventil 5 und/oder am Filter 1 bzw. 31, wobei das charakteristische Geräusch 12 von zwei örtlich von einander versetzt angeordneten, akustischen Sensoren 2, 32 erfasst wird. Das Sensorsignal kann anschließend von einer elektronischen Signalfiltereinheit 6, beispielsweise einem Bandpassfilter oder einem Hochpass-Filter, gefiltert werden und wird schließlich an eine Recheneinheit 3 übermittelt. Das jeweilige Geräusch 12, welches während der Reinigung des jeweiligen Filters 1, 31 entsteht, wird dabei mittels der beiden akustischen Sensoren 2, 32 zur Erfassung von Luftschall erfasst. Die Reinigung des jeweiligen Filters 1, 31 kann schließlich durch die Erfassung des jeweiligen Geräusches 12 anhand der beiden akustischen Sensoren 2, 32 detektiert werden.

Die Detektion des jeweiligen Geräusches 12 bzw. der Reinigung des jeweiligen Filters 1, 31 basiert insbesondere auf einer unterschiedlichen, jeweiligen Laufzeit des Geräusches 12 vom Ort seiner Entstehung zum jeweiligen akustischen Sensor 2, 32. Hierzu sind die akustischen Sensoren 2, 32 vorzugsweise geeignet angeordnet.

Somit kann der jeweilige Reinigungsvorgang detektiert werden und insbesondere können Fehlfunktionen des jeweiligen Reinigungsvorgangs festgestellt werden können. Weiterhin kann die Recheneinheit 3 dazu ausgelegt sein, einen Zustand des Filters 1 bzw. 31 und/oder des jeweiligen Ventils 5 zu ermitteln.

Weiterhin können die Sensorsignale, der Zustand des Filters 1 und/oder des Ventils 5 in einer Speichereinheit 7 abgelegt werden, wodurch die Ermittlung eines Trends der jeweiligen Größe bestimmt werden kann.

Zur Übermittlung von Signalen bzw. Daten ist die Steuerung 4 sowohl mit dem jeweiligen Ventil 5 als auch dem jeweiligen akustischen Sensor 2 bzw. 32 verbunden, wobei der jeweilige akustische Sensor 2 bzw. 32 mit der elektronischen Signalfiltereinheit 6 und der Recheneinheit 3 verbunden ist, welche schließlich mit der Speichereinheit 7 verbunden ist. Dabei kann die jeweilige Verbindung drahtgebunden oder drahtlos bzw. optisch ausgeführt sein.

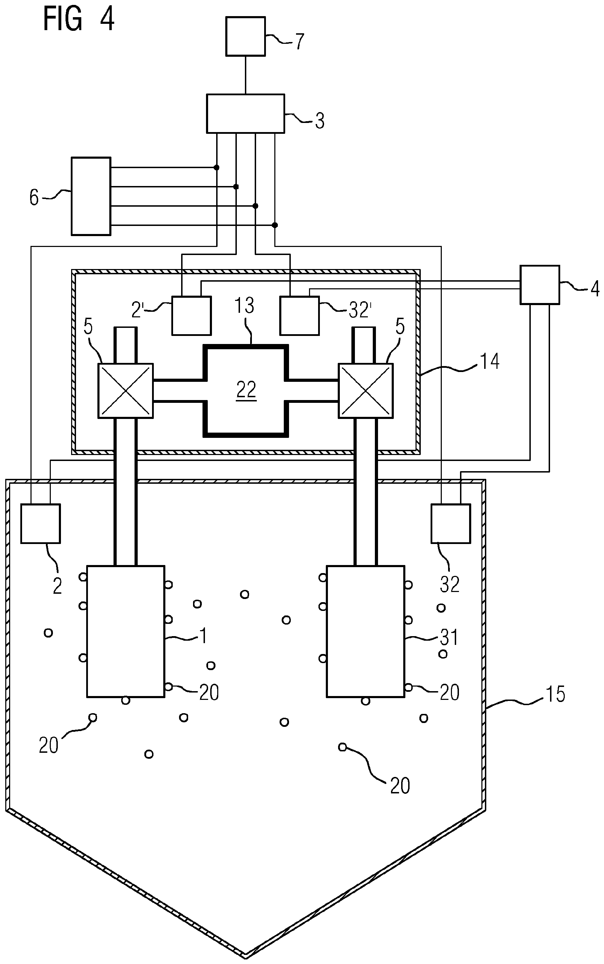

Figur 4 zeigt ein zweites Ausführungsbeispiel der erfindungsgemäßen Anlage. In Abwandlung zum ersten Ausführungsbeispiel weist das zweite Ausführungsbeispiel der erfindungsgemäßen Anlage eine Schalleinhausung 14 und ein Gehäuse 15 auf. Im Gehäuse 15 sind die beiden Filter 1, 31 sowie die beiden akustischen Sensoren 2, 32 untergebracht. In der Schalleinhausung 14 befinden sich das Gefäß 13, das jeweilige Ventil 5 sowie zwei weitere akustische Sensoren 2', 32' zur Erfassung von Luftschall. Die Schalleinhausung 14 ist dabei außerhalb des Gehäuses 15 angeordnet.

Durch die Schalleinhausung 14 werden die akustischen Sensoren 2', 32' von Geräuschen von außerhalb der Schalleinhausung 14 schalltechnisch abgeschirmt, so dass während des Reinigungsprozesses durch das jeweilige Ventil 5 entstehende Geräusche besonders zuverlässig durch die akustischen Sensoren 2', 32' erfasst werden können. Die akustischen Sensoren 2, 32 sind insbesondere durch die Schalleinhausung 14 vom jeweiligen Ventil 5 schalltechnisch isoliert. Zusätzlich sind die akustischen Sensoren 2, 32 durch das Gehäuse 15 von weiteren Störgeräuschen von außerhalb des Gehäuses 15 schalltechnisch isoliert, so dass sie die Geräusche des jeweiligen Filters 1, 31 bei seiner Reinigung zuverlässig erfassen können.

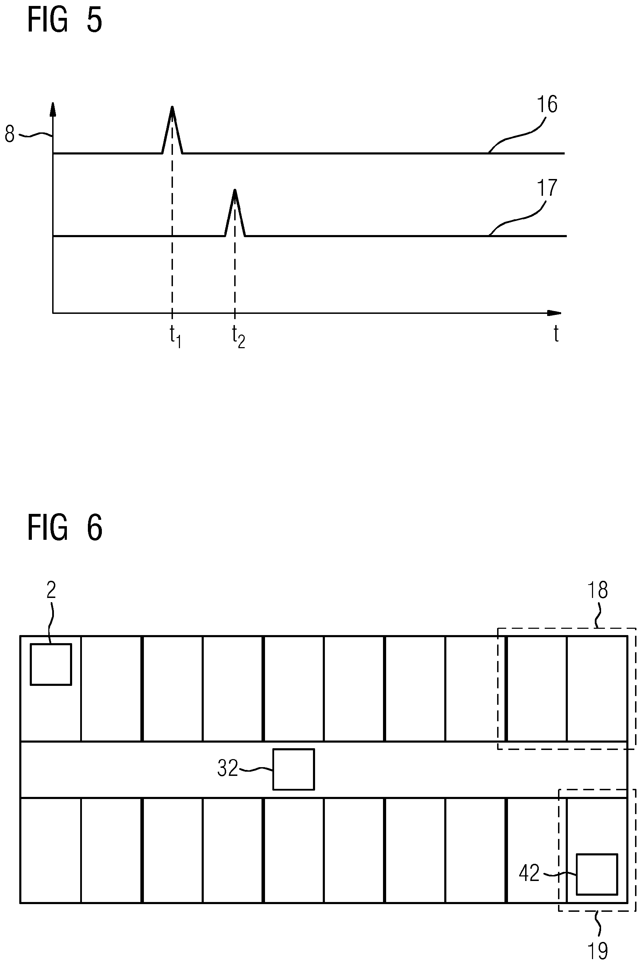

Figur 5 zeigt einen beispielhaften zeitlichen Signalverlauf von zwei akustischen Sensoren zur Erfassung von Luftschall. Auf der Abszissenachse sind die Zeit und auf der Ordinatenachse eine zeitabhängige Amplitude 8 eines ersten Signals 16 und eines zweiten Signals 17 aufgetragen. Dabei stammt jeweilige Signal 16, 17 von zwei akustischen Sensoren, insbesondere jene der Ausführungsbeispiele der erfindungsgemäßen Anlage.

Zu einem Zeitpunkt t₁ bzw. t₂ weist das erste Signal 16 bzw. das zweite Signal 17 einen Spitzenwert auf, der auf eine Geräuschamplitude bzw. darauf hinweist, dass der jeweils zugeordnete akustische Sensor ein Geräusch detektiert hat. Aus der Differenz δt_{2,1} = t₂ - t₁ kann auf den Ort der Entstehung des Geräusches geschlossen werden, wodurch insbesondere ein Reinigungsprozess eines der Filter der Ausführungsbeispiele der erfindungsgemäßen Anlage detektiert werden kann.

Figur 6 zeigt eine Schemazeichnung eines dritten Ausführungsbeispiels der erfindungsgemäßen Anlage. In der Anlage sind mehrere akustische Sensoren 2, 32, 42 zur Erfassung von Luftschall untergebracht, wobei die Anlage mehrere Abteilungen 18 aufweist, welche sich jeweils aus zwei Kammern 19 zusammensetzen. In jeder der Kammern 19 ist jeweils ein Filter angeordnet, welcher beispielsweise wie in Figur 1 dargestellt ausgeführt sein kann.

Durch die akustischen Sensoren 2, 32, 42 kann eine erfolgreiche Reinigung eines der Filter der Anlage zuverlässig detektiert werden. Vorzugsweise sind die akustischen Sensoren 2, 32, 42 hierzu geeignet angeordnet.

Zusammenfassend betrifft die Erfindung ein Verfahren zur Detektion eines Reinigungsvorganges einer Anlage mit örtlich von einander versetzt angeordneten Filtern, wobei ein erstes, Feststoffpartikel aufweisendes Gas mit einer ersten Strömungsrichtung durch den jeweiligen Filter hindurchführbar ist und mittels des jeweiligen Filters filterbar ist, wobei zur Reinigung des jeweiligen Filters ein zweites Gas in zur ersten Strömungsrichtung umgekehrter Strömungsrichtung durch den jeweiligen Filter hindurchführbar ist. Weiterhin betrifft die Erfindung ein System zur Detektion eines Reinigungsvorganges einer Anlage mit örtlich von einander versetzt angeordneten Filtern zur Filterung eines ersten, Feststoffpartikel aufweisenden Gases und eine derartige Anlage. Um einen Reinigungsvorgang einer Anlage der eingangs genannten Art kostengünstig und zuverlässig detektieren zu können, wird vorgeschlagen, dass mittels örtlich von einander versetzt angeordneter, akustischer Sensoren zur Erfassung von Luftschall ein jeweiliges Geräusch erfasst wird, welches während der Reinigung des jeweiligen Filters entsteht, wobei die Reinigung des jeweiligen Filters durch eine Erfassung des jeweiligen Geräusches anhand zumindest zwei der akustischen Sensoren detektiert wird. Weiterhin wird ein System vorgeschlagen, wobei ein erstes, Feststoffpartikel aufweisendes Gas mit einer ersten Strömungsrichtung durch den jeweiligen Filter hindurchführbar ist und mittels des jeweiligen Filters filterbar ist, wobei zur Reinigung des jeweiligen Filters ein zweites Gas in zur ersten Strömungsrichtung umgekehrter Strömungsrichtung durch den jeweiligen Filter hindurchführbar ist, wobei das System örtlich von einander versetzt angeordnete, akustische Sensoren zur Erfassung von Luftschall, mittels welchen ein Geräusch erfassbar ist, welches während der Reinigung des jeweiligen Filters entsteht, und eine Recheneinheit aufweist, mittels welcher die Reinigung des jeweiligen Filters durch eine Erfassung des jeweiligen Geräusches anhand zumindest zwei der akustischen Sensoren detektierbar ist. Schließlich wird eine Anlage vorgeschlagen, welche ein derartiges System und örtlich von einander versetzt angeordnete Filter aufweist, durch welche das erste Gas hindurchführbar ist und mittels welchen das erste Gas filterbar ist, wobei zur Reinigung des jeweiligen Filters ein zweites Gas in zur ersten Strömungsrichtung umgekehrter Strömungsrichtung durch den jeweiligen Filter hindurchführbar ist.

## Patentansprüche

1. Verfahren zur Detektion eines Reinigungsvorganges einer Anlage mit örtlich von einander versetzt angeordneten Filtern (1, 31),
wobei ein erstes, Feststoffpartikel (20) aufweisendes Gas (21) mit einer ersten Strömungsrichtung (10) durch den jeweiligen Filter (1, 31) hindurchführbar ist und mittels des jeweiligen Filters (1, 31) filterbar ist,
wobei zur Reinigung des jeweiligen Filters (1, 31) ein zweites Gas (22) in zur ersten Strömungsrichtung (10) umgekehrter Strömungsrichtung (11) durch den jeweiligen Filter (1, 31) hindurchführbar ist,
**dadurch gekennzeichnet, dass**
mittels örtlich voneinander versetzt angeordneter, akustischer Sensoren (2, 32, 2', 32', 42) zur Erfassung von Luftschall ein jeweiliges Geräusch (12) erfasst wird, welches während der Reinigung des jeweiligen Filters (1, 31) entsteht,
wobei die Reinigung des jeweiligen Filters (1, 31) durch eine Erfassung des jeweiligen Geräusches (12) anhand zumindest zwei der akustischen Sensoren (2, 32, 2', 32', 42) detektiert wird, wobei durch den Vergleich des jeweiligen Zeitpunktes des Eintreffens des jeweiligen Geräusches (12) bei zumindest zwei, vorzugsweise drei oder mehr, der akustischen Sensoren (2, 32, 2', 32', 42) zumindest ein Differenzintervall, vorzugsweise zwei oder mehr Differenzintervalle, ermittelt wird bzw. werden,
wobei das jeweilige ermittelte Differenzintervall mit einem jeweiligen, hinterlegten Differenzintervall verglichen wird.

2. Verfahren nach Anspruch 1,
wobei die Reinigung des jeweiligen Filters (1, 31) durch einen Vergleich eines jeweiligen Zeitpunktes des Eintreffens des jeweiligen Geräusches (12) bei zumindest zwei, vorzugsweise drei oder mehr, der akustischen Sensoren (2, 32, 2', 32', 42) detektiert wird.

3. Verfahren nach Anspruch 1 oder 2,
wobei zur Ermittlung des jeweiligen Zeitpunktes des Eintreffens des jeweiligen Geräusches (12) beim jeweiligen akustischen Sensor (2, 32, 2', 32', 42) ein Zeitpunkt einer maximalen Geräuschamplitude ermittelt wird.

4. Verfahren nach einem der vorhergehenden Ansprüche,
wobei das jeweilige, erfasste Geräusch (12) mittels einer Fourier-Transformation analysiert wird.

5. Verfahren nach Anspruch 4,
wobei eine erste Meldung erzeugt wird, falls eine Energie des jeweiligen, erfassten Geräusches (12) innerhalb eines vorgebbaren ersten Frequenzbandes einen vorgebbaren ersten Wert überschreitet bzw. unterschreitet.

6. Verfahren nach Anspruch 4 oder 5,
wobei eine zweite Meldung erzeugt wird, falls ein Verhältnis einer Energie des jeweiligen, erfassten Geräusches (12) innerhalb eines vorgebbaren zweiten Frequenzbandes zu einer Energie des jeweiligen, erfassten Geräusches (12) außerhalb des vorgebbaren zweiten Frequenzbandes einen vorgebbaren zweiten Wert überschreitet bzw. unterschreitet.

7. Verfahren nach einem der vorhergehenden Ansprüche,
wobei das jeweilige, erfasste Geräusch (12) mittels eines Hochpass-Filters gefiltert wird.

8. Verfahren nach einem der vorhergehenden Ansprüche,
wobei eine Schalleinhausung (14) vorgesehen ist, in welcher der jeweilige akustische Sensor (2', 32') angeordnet ist und in welcher ein jeweiliges Ventil (5) anordenbar ist, mittels welchem das zweite Gas (22) in zur ersten Strömungsrichtung umgekehrter Strömungsrichtung (11) durch den jeweiligen Filter (1, 31) hindurchführbar ist.

9. Verfahren nach einem der vorhergehenden Ansprüche,
wobei der jeweilige akustische Sensor (2, 32, 2', 32', 42) ein Sensorsignal erzeugt,
wobei das Sensorsignal an eine Recheneinheit (3) übermittelt wird,
wobei eine Recheneinheit (3) anhand des Vergleichs des Sensorsignals mit dem Referenz-Sensorsignal einen Zustand des zumindest einen Filters (1, 31) und/oder des zumindest einen Ventils (5) ermittelt.

10. System zur Detektion eines Reinigungsvorganges einer Anlage mit örtlich voneinander versetzt angeordneten Filtern (1, 31),
wobei ein erstes, Feststoffpartikel (20) aufweisendes Gas (21) mit einer ersten Strömungsrichtung (10) durch den jeweiligen Filter (1, 31) hindurchführbar ist und mittels des jeweiligen Filters (1, 31) filterbar ist,
wobei zur Reinigung des jeweiligen Filters (1, 31) ein zweites Gas (22) in zur ersten Strömungsrichtung umgekehrter Strömungsrichtung (11) durch den jeweiligen Filter (1, 31) hindurchführbar ist,
wobei das System aufweist
- örtlich voneinander versetzt angeordnete, akustische Sensoren (2, 32, 2', 32', 42) zur Erfassung von Luftschall, mittels welchen ein Geräusch (12) erfassbar ist, welches während der Reinigung des jeweiligen Filters (1, 31) entsteht, und
- eine Recheneinheit (3), mittels welcher die Reinigung des jeweiligen Filters (1, 31) durch eine Erfassung des jeweiligen Geräusches (12) anhand zumindest zwei der akustischen Sensoren (2, 32, 2', 32', 42) detektierbar ist, wobei durch den Vergleich des jeweiligen Zeitpunktes des Eintreffens des jeweiligen Geräusches (12) bei zumindest zwei, vorzugsweise drei oder mehr, der akustischen Sensoren (2, 32, 2', 32', 42) zumindest ein Differenzintervall, vorzugsweise zwei oder mehr Differenzintervalle, ermittelbar ist bzw. sind,
wobei das jeweilige ermittelte Differenzintervall mit einem jeweiligen, hinterlegten Differenzintervall verglichen wird.

11. System nach Anspruch 10,
wobei das System eine Schalleinhausung (14) aufweist, in welcher der jeweilige akustische Sensor (2', 32') angeordnet ist und in welchem ein jeweiliges Ventil (5) anordenbar ist, mittels welchem das zweite Gas (22) in zur ersten Strömungsrichtung umgekehrter Strömungsrichtung (11) durch den jeweiligen Filter (1, 31) hindurchführbar ist.

12. Anlage zur Filterung eines ersten, Feststoffpartikel (20) aufweisenden Gases (21) aufweisend
- örtlich voneinander versetzt angeordnete Filter (1, 31), durch welche das erste Gas (21) hindurchführbar ist und mittels welchen das erste Gas (21) filterbar ist,
wobei zur Reinigung des jeweiligen Filters (1, 31) Strömungsrichtung (11) durch den jeweiligen Filter (1, 31) hindurchführbar ist, und
- ein System nach Anspruch 10 oder 11.

13. Anlage nach Anspruch 12 mit einem System nach Anspruch 11,
wobei die Anlage ein jeweiliges, in der Schalleinhausung (14) angeordnetes Ventil (5) aufweist, mittels welchem das zweite Gas (22) in zur ersten Strömungsrichtung umgekehrter Strömungsrichtung (11) durch den jeweiligen Filter (1, 31) hindurchführbar ist.

## Claims

1. Method for detecting a cleaning process in a plant having filters (1, 31) arranged spatially offset from one another, wherein a first gas (21) containing solid particles (20) can be fed in a first flow direction (10) through the filter (1, 31) concerned and can be filtered by means of the filter concerned (1, 31),
wherein, for the purpose of cleaning the filter (1, 31) concerned, a second gas (22) can be fed through the filter concerned (1, 31) in a direction of flow (11) opposite to the first direction of flow (10),
**characterised in that**
a relevant noise (12) which arises during the cleaning of the filter (1, 31) concerned is captured by means of acoustic sensors (2, 32, 2', 32', 42), for picking up air sounds, which are arranged with a spatial offset from one another,
wherein the cleaning of the filter (1, 31) concerned is detected by the capture of the noise (12) concerned by means of at least two of the acoustic sensors (2, 32, 2', 32', 42), wherein, by comparing for at least two, preferably three or more, of the acoustic sensors (2, 32, 2', 32', 42) the relevant time points for the arrival of the noise (12) concerned, at least one difference interval, preferably two or more difference intervals, is/are determined,
wherein the difference interval which is determined is compared with a relevant stored difference interval.

2. Method according to claim 1,
wherein the cleaning of the filter (1, 31) concerned is detected by a comparison of the time points at which the relevant noise (12) arrives at each of at least two, and preferably three or more, of the acoustic sensors (2, 32, 2', 32', 42).

3. Method according to claim 1 or 2,
wherein, for the purpose of determining the relevant time point for the arrival of the noise (12) concerned at the relevant acoustic sensor (2, 32, 2', 32', 42), a point in time of a maximum noise amplitude is determined.

4. Method according to one of the preceding claims,
wherein the relevant noise (12) which has been captured is analysed by means of a Fourier transformation.

5. Method according to claim 4,
wherein a first message is created if, within a prescribable frequency range, the energy of the noise (12) concerned which has been captured exceeds or falls below a prescribable first value.

6. Method according to claim 4 or 5,
wherein a second message is created if a ratio of the energy of the noise (12) concerned, captured within a prescribable second frequency range, to the energy of the noise (12) concerned captured outside the prescribable second frequency range, exceeds or falls below a prescribable second value, as applicable.

7. Method according to one of the preceding claims,
wherein the relevant noise (12) which has been captured is filtered by means of a high-pass filter.

8. Method according to one of the preceding claims,
wherein a sound enclosure (14) is provided, in which is arranged the acoustic sensor (2', 32') concerned and in which can be arranged a relevant valve (5), by means of which the second gas (22) can be fed through the filter concerned (1, 31) in a direction of flow (11) opposite to the first flow direction.

9. Method according to one of the preceding claims,
wherein the acoustic sensor (2, 32, 2', 32', 42) concerned creates a sensor signal,
wherein the sensor signal is communicated to a computing unit (3),
wherein a computing unit (3), by means of a comparison of the sensor signal with the reference sensor signal, determines a status for the at least one filter (1, 31) and/or for the at least one valve (5).

10. System for the detection of a cleaning process in a plant having filters (1, 31) arranged spatially offset from one another,
wherein a first gas (21) containing solid particles (20) can be fed in a first flow direction (10) through the filter (1, 31) concerned and can be filtered by means of the filter concerned (1, 31),
wherein, for the purpose of cleaning the filter (1, 31) concerned, a second gas (22) can be fed through the filter (1, 31) concerned in a direction of flow (11) opposite to the first direction of flow,
wherein the system has
- acoustic sensors (2, 32, 2', 32', 42), for picking up air sounds, which are arranged with a spatial offset from one another, by means of which it is possible to capture a relevant noise (12) which arises during the cleaning of the filter (1, 31) concerned, and
- a computing unit (3), by means of which it is possible to detect the cleaning of the filter (1, 31) concerned by the capture of the noise (12) concerned by means of at least two of the acoustic sensors (2, 32, 2', 32', 42), wherein, by comparing for at least two, preferably three or more, of the acoustic sensors (2, 32, 2', 32', 42) the relevant time points for the arrival of the noise (12) concerned, at least one difference interval, preferably two or more difference intervals, is/are determined,
wherein the relevant difference interval which is determined is compared with a relevant stored difference interval.

11. System according to claim 10,
wherein the system has a sound enclosure (14), in which is arranged the acoustic sensor (2', 32') concerned and in which can be arranged a relevant valve (5), by means of which the second gas (22) can be fed through the filter (1, 31) concerned in a direction of flow (11) opposite to the first flow direction.

12. Plant for filtering a first gas (21) containing particles of solid matter (20) having
- filters (1, 31) arranged spatially offset from one another, through which the first gas (21) can be fed and by means of which the first gas (21) can be filtered,
wherein, for the purpose of cleaning the filter (1, 31) concerned, can be fed direction of flow (11) through the filter (1, 31) concerned, and
- a system according to claim 10 or 11.

13. Plant according to claim 12 with a system according to claim 11,
wherein the plant has a relevant valve (5) arranged in the sound enclosure (14), by means of which the second gas (22) can be fed through the filter (1, 31) concerned in a direction of flow (11) opposite to the first flow direction.

## Revendications

1. Procédé pour la détection d'un processus de nettoyage d'une installation avec des filtres (1, 31) disposés de manière décalée dans l'espace l'un par rapport à l'autre,
dans lequel un premier gaz (21) comprenant des particules solides (20) peut passer à travers le filtre (1, 31) respectif avec une première direction d'écoulement (10) et est filtrable au moyen du filtre (1, 31) respectif,
dans lequel, pour le nettoyage du filtre (1, 31) respectif, un deuxième gaz (22) peut passer à travers le filtre (1, 31) respectif dans une direction d'écoulement (11) opposée à la première direction d'écoulement (10),
**caractérisé en ce que**,
au moyen de capteurs acoustiques (2, 32, 2', 32', 42) pour l'enregistrement de son aérien disposés de manière décalée dans l'espace les uns par rapport aux autres, il est enregistré un bruit (12) respectif, lequel se produit pendant le nettoyage du filtre (1, 31) respectif,
dans lequel le nettoyage du filtre (1, 31) respectif est détecté par l'intermédiaire d'un enregistrement du bruit (12) respectif à l'aide d'au moins deux des capteurs acoustiques (2, 32, 2', 32', 42), dans lequel au moins un intervalle différentiel, de préférence deux intervalles différentiels ou plus, est ou sont déterminés par l'intermédiaire de la comparaison du moment respectif de la survenue du bruit (12) respectif au niveau d'au moins deux, de préférence trois ou plus, des capteurs acoustiques (2, 32, 2', 32', 42),
dans lequel l'intervalle différentiel déterminé respectif est comparé à un intervalle différentiel mémorisé respectif.

2. Procédé selon la revendication 1,
dans lequel le nettoyage du filtre (1, 31) respectif est détecté par l'intermédiaire d'une comparaison d'un moment respectif de la survenue du bruit (12) respectif au niveau d'au moins deux, de préférence trois ou plus, des capteurs acoustiques (2, 32, 2', 32', 42).

3. Procédé selon la revendication 1 ou la revendication 2,
dans lequel, pour la détermination du moment respectif de la survenue du bruit (12) respectif au niveau du capteur acoustique (2, 32, 2', 32', 42) respectif, il est déterminé un moment d'une amplitude de bruit maximale.

4. Procédé selon l'une des revendications précédentes,
dans lequel le bruit (12) enregistré respectif est analysé au moyen d'une transformation de Fourier.

5. Procédé selon la revendication 4,
dans lequel une première notification est produite au cas où une énergie du bruit (12) enregistré respectif à l'intérieur d'une première bande de fréquence pouvant être prédéfinie dépasse vers le haut resp. vers le bas une première valeur pouvant être prédéfinie.

6. Procédé selon la revendication 4 ou la revendication 5,
dans lequel une deuxième notification est produite au cas où un rapport d'une énergie du bruit (12) enregistré respectif à l'intérieur d'une deuxième bande de fréquence pouvant être prédéfinie à une énergie du bruit (12) enregistré respectif à l'extérieur de la deuxième bande de fréquence pouvant être prédéfinie dépasse vers le haut resp. vers le bas une deuxième valeur pouvant être prédéfinie.

7. Procédé selon l'une des revendications précédentes,
dans lequel le bruit (12) enregistré respectif est filtré au moyen d'un filtre passe-haut.

8. Procédé selon l'une des revendications précédentes,
dans lequel il est prévu une enceinte d'insonorisation (14) dans laquelle est disposé le capteur acoustique (2', 32') respectif et dans laquelle peut être disposée une soupape (5) respective au moyen de laquelle le deuxième gaz (22) peut passer à travers le filtre (1, 31) respectif dans une direction d'écoulement (11) opposée à la première direction d'écoulement.

9. Procédé selon l'une des revendications précédentes,
dans lequel le capteur acoustique (2, 32, 2', 32', 42) respectif produit un signal de capteur,
dans lequel le signal de capteur est transmis à une unité de calcul (3),
dans lequel une unité de calcul (3) détermine un état de l'au moins un filtre (1, 31) et/ou de l'au moins une soupape (5) à l'aide de la comparaison du signal de capteur au signal de capteur de référence.

10. Système pour la détection d'un processus de nettoyage d'une installation avec des filtres (1, 31) disposés de manière décalée dans l'espace l'un par rapport à l'autre,
dans lequel un premier gaz (21) comprenant des particules solides (20) peut passer à travers le filtre (1, 31) respectif avec une première direction d'écoulement (10) et est filtrable au moyen du filtre (1, 31) respectif,
dans lequel, pour le nettoyage du filtre (1, 31) respectif, un deuxième gaz (22) peut passer à travers le filtre (1, 31) respectif dans une direction d'écoulement (11) opposée à la première direction d'écoulement,
le système comprenant
- des capteurs acoustiques (2, 32, 2', 32', 42) pour l'enregistrement de son aérien disposés de manière décalée dans l'espace les uns par rapport aux autres, au moyen desquels il peut être enregistré un bruit (12), lequel se produit pendant le nettoyage du filtre (1, 31) respectif, et
- une unité de calcul (3) au moyen de laquelle le nettoyage du filtre (1, 31) respectif est détectable par l'intermédiaire d'un enregistrement du bruit (12) respectif à l'aide d'au moins deux des capteurs acoustiques (2, 32, 2', 32', 42), dans lequel au moins un intervalle différentiel, de préférence deux intervalles différentiels ou plus, est ou sont déterminables par l'intermédiaire de la comparaison du moment respectif de la survenue du bruit (12) respectif au niveau d'au moins deux, de préférence trois ou plus, des capteurs acoustiques (2, 32, 2', 32', 42),
dans lequel l'intervalle différentiel déterminé respectif est comparé à un intervalle différentiel mémorisé respectif.

11. Système selon la revendication 10,
le système comprenant une enceinte d'insonorisation (14) dans laquelle est disposé le capteur acoustique (2', 32') respectif et dans laquelle peut être disposée une soupape (5) respective au moyen de laquelle le deuxième gaz (22) peut passer à travers le filtre (1, 31) respectif dans une direction d'écoulement (11) opposée à la première direction d'écoulement.

12. Installation pour la filtration d'un premier gaz (21) comprenant des particules solides (20), comprenant
- des filtres (1, 31) disposés de manière décalée dans l'espace l'un par rapport à l'autre, à travers lesquels peut passer le premier gaz (21) et au moyen desquels est filtrable le premier gaz (21),
dans laquelle, pour le nettoyage du filtre (1, 31) respectif, la direction d'écoulement (11) peut passer à travers le filtre (1, 31) respectif, et
- un système selon la revendication 10 ou la revendication 11.

13. Installation selon la revendication 12 avec un système selon la revendication 11,
l'installation comprenant une soupape (5) respective, disposée dans l'enceinte d'insonorisation (14), au moyen de laquelle le deuxième gaz (22) peut passer à travers le filtre (1, 31) respectif dans une direction d'écoulement (11) opposée à la première direction d'écoulement.
